# EUROPEAN PATENT APPLICATION

(11) **EP 3 340 148 A1**
(43) Date of publication of application: **27.06.2018**
(21) Application number: 16206384.6
(22) Date of filing: 22.12.2016
(51) Int. Cl.: G06Q 20/40

(54) **AUTOMATED PROCESS FOR VALIDATING AN AUTOMATED BILLING UPDATE (ABU) CYCLE TO PREVENT FRAUD**

(71) Applicant: Mastercard International Incorporated, Purchase, New York 10577 (US)
(72) Inventor: LYNCH, Richard, Kilmallock, Co. Limerick (IE)
(74) Representative: Murgitroyd & Company

(57) **Abstract**

A computer implemented method for identifying unauthorized recurring financial transactions requests, the method comprising the steps of identifying a group of financial transaction request data as being part of data associated with an automated billing update cycle, extracting automated billing update data, the automated billing update data comprising at least data regarding the merchant, billing schedule and involved primary account numbers, selecting a sample of the data corresponding to involved primary account numbers from the extracted automated billing update data, reviewing financial transaction history data of the selected primary account numbers, comparing the extracted automated billing update data with the financial transaction history data of the selected primary account numbers, and determining whether the financial transaction request is valid or potentially fraudulent based on the comparison result..

## Description

### Technical Field

The present disclosure relates to the field of fraud prevention in electronic payment. More particularly, the present disclosure relates to a method for the validation of financial transactions to be processed as recurring transactions being part of an Automated Billing Update (ABU) cycle. Moreover, the disclosure relates to a computer program product and a computer readable medium. The computer readable medium comprises computer-executable instructions, which, when executed by the respective device(s) being equipped with processors causing the device(s) to perform the method steps of the disclosure on the respective device.

### Background

Recurring payment card charges being part of an Automated Billing Update (ABU) cycle are increasingly used by merchants and different providers of a variety of different services which include service provision and payment on a regular basis. The use of payment cards like credit or debit cards facilitates conclusion of contract for both parties. In addition, different card network allow facilitated and accelerated processing of the financial transactions, e.g. by lowering the certain processing requirements, e.g. provision and validation of card expire dates, if a financial transaction is a recurring transaction belonging to an ABU cycle.

Initiation of financial transaction to be processed from a payment card normally requires explicit authorisation by the card owner to the respective merchant or service provider. However, this initial authorisation only allows the respective merchant or service provider to start making recurring payment card charges, but verification of existence and/or validity of the authorisation is not part of the transaction processing process. Accordingly, request for financial transactions marked as recurring payments being part of an ABU cycle are under facilitated processing under the assumption that a valid authorisation for the transaction exists.

However, while processing is facilitated, the risk of incorrect transactions or even fraud is increased. As an example, if a recurring payment card charge of an authorised merchant or payment provider is mimicked, respective payment transaction request marked as recurring payments might be processed directly even though the payment is not authorised by the card user. Alternatively, if a payment request is repeated by mistake, the request might be processed directly, resulting in a double payment.

The effects of incorrect and unauthorised financial transactions are at least unnecessary expenses associated with administrative tasks in rectifying such transactions, but also financial damages due to fraud can occur. Accordingly, there is a need to enhance the possibilities of an automated process for validating an Automated Billing Update (ABU) cycle to prevent fraud.

### Summary of the invention

The present disclosure provides one or more solutions to the problems and disadvantages of the background art. Other technical advantages of the present disclosure will be readily apparent to one skilled in the art from the following description and claims.

The present disclosure is directed to a computer implemented method for identifying unauthorized recurring financial transactions requests, the method comprising:
- Identifying a group of financial transaction request data as being part of data associated with an automated billing update cycle;
- Extracting automated billing update data, the automated billing update data comprising at least data regarding the merchant, billing schedule and involved primary account numbers;
- Selecting a sample of the data corresponding to involved primary account numbers from the extracted automated billing update data;
- Review financial transaction history data of the selected primary account numbers;
- Comparing the extracted automated billing update data with the financial transaction history data of the selected primary account numbers; and
- If it is the first occurrence of the automated billing update cycle in the transaction history of the selected primary account numbers and/or if the billing schedule differs from corresponding billing cycles of said merchant in the transaction history of the selected primary account numbers, mark the recurring financial transaction request as potentially fraudulent, or
- If an equivalent of the automated billing update cycle already occurred in at least a portion of the transaction histories of the selected primary account numbers, mark the recurring financial transaction request as valid

The sample of the data corresponding to involved primary account numbers from the extracted automated billing update data may encompass all primary account numbers associated to the respective ABU cycle. Alternatively, the sample of data corresponding to involved primary account numbers may be a subset of all associated primary account numbers resulting from a predefined selection process.

In cases the financial transactions are marked as valid, the financial transaction requests are processed according to the automated billing update cycle requirements. If the financial transaction requests are marked as potentially fraudulent, further authorisation is required before the transactions can be processed. If the further authorisation is not given to the card network upon request, the transaction is cancelled and the process is stopped.

In another aspect of the present invention, the identification of financial transaction request data as being part of data associated with an automated billing update cycle is based an the presence of an identifier. The identifier may be any kind of indicator written into the transaction request.

In another aspect of the present invention, the sample of the data corresponding to involved primary account numbers is based on random selection from the complete set of primary account numbers included in the respective automated billing update cycle. The complete set of primary account numbers included in the respective automated billing update cycle maybe the primary account numbers included into a single transaction request or maybe a group of primary account numbers related to transactions request showing common features. Non limiting examples of common features may be the merchant or service provider or a corresponding identifier, charging date or schedule, charging amount and combinations thereof and the like.

In yet another aspect of the present invention, a transaction is marked as potentially fraudulent, if it is the first occurrence of the automated billing update cycle in the transaction history data of more than one of the selected primary account numbers. For this purpose, transaction history data of all primary account numbers associated to the ABU cycle or of randomly selected primary account numbers may be analysed. The identification of recurring payment card charges being part of a specific ABU cycle may be based on common features related to the transaction. Non limiting examples of common features may be the merchant or service provider or a corresponding identifier, charging date or schedule, charging amount and combinations thereof and the like. Alternatively or in addition, the identification may be based on a common identifier or indicator tag associated to the transaction request. In order to avoid false positive results, a transaction may only be marked as potentially fraudulent, if it is the first occurrence in a relevant number of the transaction history data of the selected primary account numbers. Depending on the required statistical significance level, the relevant number can vary.

In another aspect of the present invention, the transaction is marked as potentially fraudulent, if the billing schedule differs from corresponding billing cycles of that merchant in the transaction history data of more than one of the selected primary account numbers. Recurring payment card charges are usually processed based on a fixed schedule. The detection may take into account factors which may cause aberrations from the predetermined transaction schedule, such as bank holidays or the like. In order to further avoid false positive results, a transaction may only be marked as potentially fraudulent, if the transaction schedule differs in a relevant number of the transaction history data of the selected primary account numbers. Depending on the required statistical security level, the relevant number can vary.

In yet another aspect of the present invention, the billing schedule defines the reoccurrence date of the financial transaction requests being part of an automated billing update cycle.

In another aspect of the present invention, the financial transaction history data includes the financial transactions associated to and previously made with a primary account number.

In another aspect of the present invention, financial transactions marked as fraudulent require further authorisation for processing. When a set of financial transactions request belonging to ABU cycle marked as potentially fraudulent, processing of the financial transaction is blocked. Blocking may take place on the level of the card network being responsible for the evaluation of the ABU cycles. The blocking of the transactions will be maintained until further authorisation has been given. Further authorisation may be given upon request directly by the owner of the payment card associated to the primary account. Alternatively, or in addition, further authorisation may also be given by the merchant or the service provider having requested the financial transaction. In this case, the authorisation may be in form of an authorisation for recurring payment card charges given by the owner of the account associated to the used payment card. This authorisation may be the initial authorisation given to the merchant or the service provider by the owner when ordering goods and/or services to be paid by reoccurring financial transactions.

In yet another aspect of the present invention, presence of the further authorisation is associated to a user profile associated to the owner, and this user profile may be stored as user profile data in a database associated to the card network. The further authorisation may be the initial authorisation given to the merchant or the service provider by the owner when ordering goods and/or services to be paid by reoccurring financial transactions. This initial authorisation may be provided to the card network when the recurring transaction is requested. The card network may store the authorisation together with a user profile corresponding to the owner of the payment card. With storing the authorisation by the user relating to a recurring payment transaction requested by a dedicated merchant or service provider, the card network may set an indicator in the user profile, indicating that authorisation has been given for the respective recurring transaction. The presence of a respective authorisation indicator in a user profile may substitute further authorisation in cases when a recurring transaction is marked as potentially fraudulent.

In addition or alternatively, the presence of an authorisation indicator may routinely prompted for all involved primary account numbers or for randomly selected primary account numbers involved in an ABU cycle or, alternatively, for all primary account numbers involved in an ABU cycle.

The present disclosure is also directed to a computer program product comprising program instructions for carrying out each of the method steps of the disclosure, when said product is executed on a computer.

The present invention is also directed to a computing device configured to execute each of the method of the disclosure.

Furthermore, the present disclosure is directed to a computer readable medium storing program instructions, which, when executed by a processor of a computer cause the computer to perform each of the method steps of the disclosure.

One advantage that may be realized in the practice of some embodiments of the described methods is that raw data of biometric samples can electronically be stored securely and may be consolidated and rebuilt for verification of doubtful biometric authentication processes. Other technical advantages of the present disclosure will be readily apparent to one skilled in the art from the following description of preferred embodiments and the claims. Various embodiments of the present application obtain only a subset of the advantages set forth. No single advantage is critical to the embodiments. Any claimed embodiment may be technically combined with any other claimed embodiments.

### Brief description of the Drawings

Fig.1 shows a flowchart of the automated validation process;
Fig. 2a is a schematic representation of the validation process;;
Fig. 2b is a schematic representation of an identification process of a potentially fraudulent recurring financial transaction; and
Fig. 2c is a schematic representation of another identification process of a potentially fraudulent recurring financial transaction; and
Fig. 3 is a block diagram showing the entities involved in the initial authorisation process and the processing of recurring payments.

The accompanying drawings illustrate exemplary embodiments of the disclosure and serve to explain, by way of example only, the principles of the disclosure.

### Detailed description

The present disclosure will now be described more fully hereinafter with reference to the accompanying figures, in which preferred embodiments are shown. The method, however, may be embodied in many different forms and should not be construed as limited to the embodiments set forth herein. It should be noted that these figures are intended to illustrate the general characteristics of the methods utilized in certain embodiments. However, the figures may not precisely reflect the precise structure or performance characteristic of any given embodiment. Moreover, in the figures like reference numerals designate corresponding parts throughout the different views or embodiments.

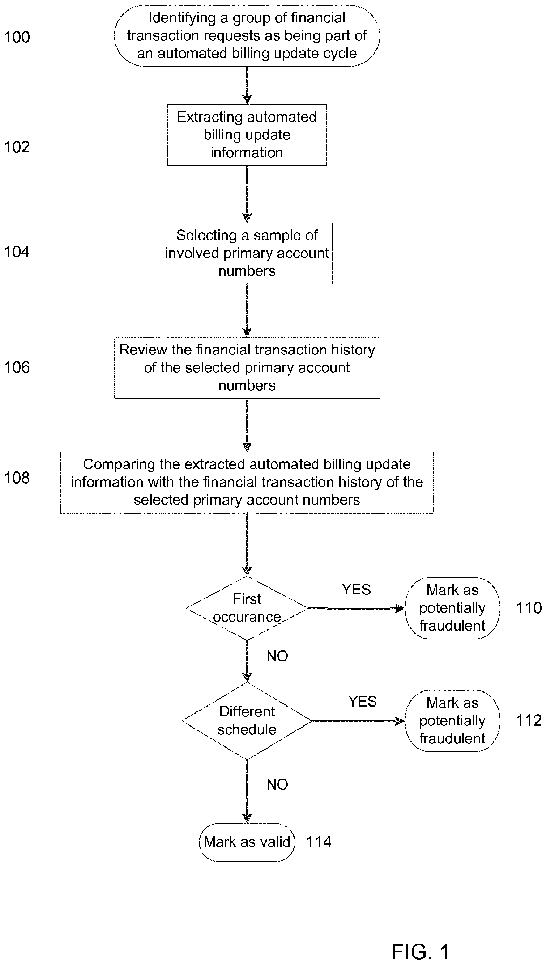

Fig. 1 shows the flowchart of the automated validation process. At step 100, a group of financial transaction request data received for processing at the card network is identified as being part of data associated with an automated billing cycle update. The identification can be based on any information indicating that a respective transaction request is part of an automated billing cycle update; the identification can be based on a respective byte of data set, a recurring indicator, in the transaction request.

If a financial transaction request is identified as a recurring transaction, i.e. the corresponding financial transaction request data as being part of data associated with an automated billing cycle update, automated billing update data is extracted from the transaction request data at step 102. The billing update data comprises at least data regarding the requester of the transaction, e.g. the merchant of the service provider requesting a payment, the billing schedule, i.e. an indication when the respective action is to be realized, and the involved primary account number, i.e. an unique identifier of the payment card to be used for the respective payment. Based on the extracted automated billing update data, transaction requests can be grouped for subsequent analysis and validation processes. Grouping may be based on different parameters or values extracted from the automated billing update data. Transactions requests can be grouped, such that all transaction requests associated to the same merchant and having the same billing schedule are in a common group.

At step 104 a sample of data corresponding to involved primary account numbers (PIN) is selected. The selection may encompass all primary account numbers involved in or associated to the ABU cycle or is on a random basis and the PINs are selected from the same group.

At step 106 transaction history data of the selected PINs is analysed. For this purpose, all financial transactions processed on an individual PIN are reviewed. The number of prior transaction or the transaction period to be reviewed is not limited and may be determined in dependence of the billing schedule. The transaction history data is at step 108 compared with the extracted automated billing update data. The result of the comparison step shows whether a corresponding financial transaction request, i.e. a financial transaction request initiated by the same merchant or service provider and/or having the same billing schedule has been processed on the selected PIN in the past. If it is the first occurrence of a transaction request by this merchant or service provider and/or the billing schedule differs from prior transactions requests by this merchant or service provider, the transaction request may potentially be fraudulent. In order to avoid false positive hits, e.g. that a transaction request to be processed for a new costumer is marked as fraudulent, a sample size corresponding to the number of selected involved PINs and a minimum number of potentially fraudulent transactions requests for this sample number can be defined. By this, the statistical significance of the validation process can be improved.

If the comparison of the extracted automated billing update information and the transaction history of the selected PINs indicates a certain probability of fraud, the entire group of transaction requests is marked at steps 110 and 112 as potentially fraudulent. In these cases further authorisation is requested in order to either process the transactions in case the authorisation is given or to cancel the transactions.

If the comparison of the extracted automated billing update data and the transaction history data of the selected PINs indicates validity of the transaction requests at a certain probability level, the transactions are marked as valid at step 114. In this case the financial transaction requests will be processed.

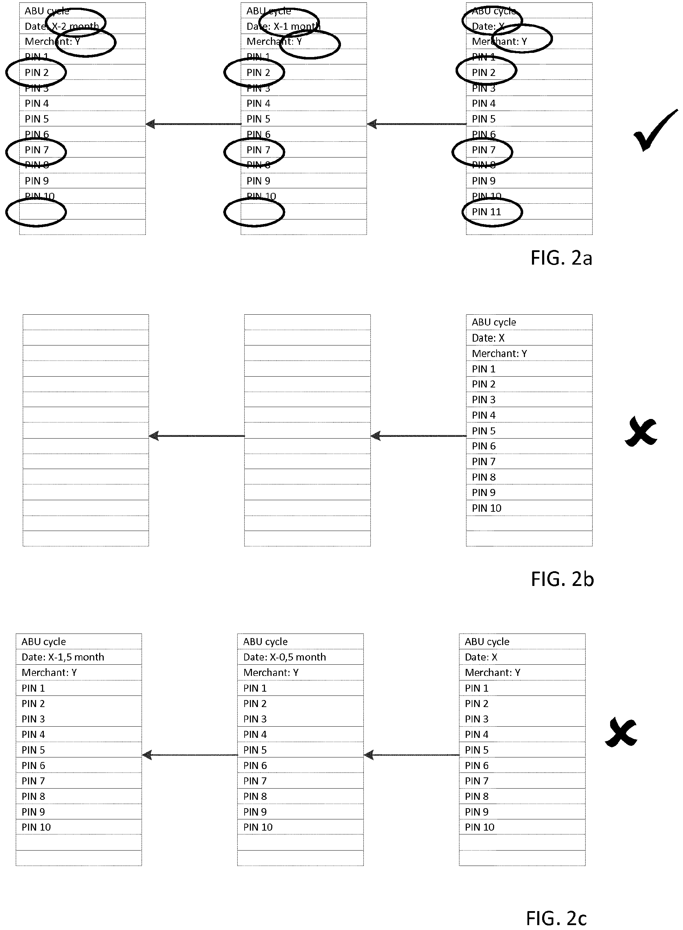

Figures 2a to 2c are schematic representation of the validation process. In Figure 2a an ABU cycle of financial transactions to be processed at date X upon request of merchant Y from PINs 1 to 11 resulting in a respective grouping. The analysis of the transaction history data in total would show that a corresponding ABU cycle was processed one month earlier, at date X minus 1 month, upon request of the same merchant, merchant Y from PINs 1 to 10 and also at date X minus 2 month. If the transaction history data is limited to some randomly selected PINs, as marked in Fig. 2a, the analysis reveals that it is not the first occurrence of the ABU cycle with regard to selected PINS 2 and 7, but with respect to selected PIN 11. Based on this, the transaction request is most probably valid and will be marked accordingly.

Fig. 2b schematically shows a case in which it is the first occurrence of the ABU cycle to be processed at date X upon request of Merchant Y. Based on this, the transaction request is considered as potentially fraudulent and will be marked accordingly.

Similar to this, fig. 2c shows a case, in which the processing date of the analysed ABU cycle differs from the previously processed billing cycles from this merchant. The transaction history data shows that the prior transactions corresponding to this cycle have been processed on a monthly basis, wherein the analysed cycle is half e month after the previous transaction. Based on this, the transaction request is considered as potentially fraudulent and will be marked accordingly.

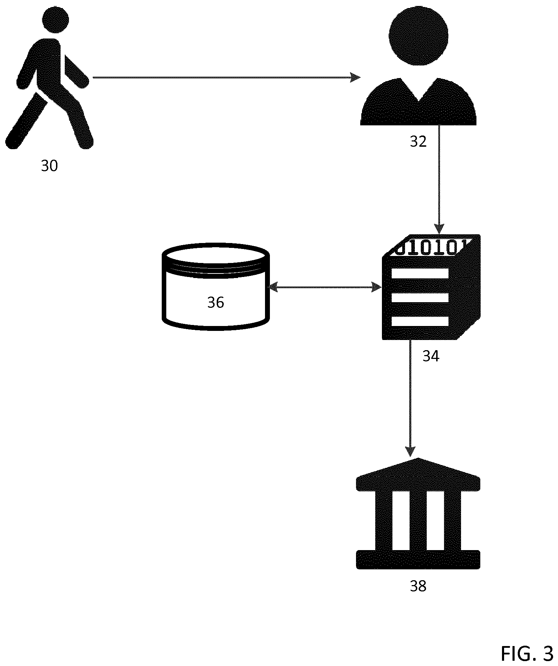

Figure 3 is a block diagram showing the entities involved in the initial authorisation process and the processing of recurring payments. A user 30 authorises a merchant 32 for requesting recurring charges from his payment card. The merchant transmits a transaction request associated to an ABU cycle together with the authorisation given by the user to the card network 34. The card network associates the authorisation to a user profile and stores the user profile in form of user profile data in a database 36. The association of the authorisation of the recurring transaction to the respective merchant at the scheduled processing date can be indicated as an authorisation indicator in the user profile data. The user profile data can contain multiple different authorisation indicators corresponding the different ABU cycles. The user profile data contains all necessary information, including the PIN and the account details. The card network processes the request by requesting payment authorization from the issuing bank 38. For future financial transaction request, the authorisation indicator stored in the user profile can be checked routinely, i.e. for every incoming transaction request based on an ABU cycle update, or in case the transaction is marked as potentially fraudulent only.

This description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A computer implemented method for identifying unauthorized recurring financial transactions requests, the method comprising:
identifying a group of financial transaction request data as being part of data associated with an automated billing update cycle;
extracting automated billing update data, the automated billing update data comprising at least data regarding the merchant, billing schedule and involved primary account numbers;
selecting a sample of the data corresponding to involved primary account numbers from the extracted automated billing update data;
reviewing financial transaction history data of the selected primary account numbers; comparing the extracted automated billing update data with the financial transaction history data of the selected primary account numbers; and
if it is the first occurrence of the automated billing update cycle in the transaction history of the selected primary account numbers and/or if the billing schedule differs from corresponding billing cycles of said merchant in the transaction history data of the selected primary account numbers, mark the recurring financial transaction request as potentially fraudulent, or
If an equivalent of the automated billing update cycle already occurred in at least a portion of the transaction histories of the selected primary account numbers, mark the recurring financial transaction request as valid.

2. Method according to claim 1, wherein the identification of financial transaction request data as being part of an automated billing update cycle is based upon the presence of an identifier.

3. Method according to claim 1 or 2, wherein the sample of involved primary account numbers includes is based on random selection from the complete set of primary account numbers included in the respective automated billing update cycle.

4. Method according to any of claims 1 to 3, wherein the transaction is marked as potentially fraudulent, if it is the first occurrence of the automated billing update cycle in the transaction history data of more than one of the selected primary account numbers.

5. Method according to any of claims 1 to 4, wherein the transaction is marked as potentially fraudulent, if the billing schedule differs from corresponding billing cycles of that merchant in the transaction history data of more than one of the selected primary account numbers.

6. Method according to any of claims 1 to 5, wherein the billing schedule defines the reoccurrence date of the financial transaction requests being part of an automated billing update cycle.

7. Method according to any of claims 1 to 6, wherein the financial transaction history data includes data corresponding the financial transactions associated to and previously made with a primary account number.

8. Method according to any of claims 1 to 7, wherein financial transactions marked as fraudulent require further authorisation to continue processing.

9. Method according to claim 8, wherein the further authorisation is requested from the owner(s) of credit cards associated to the primary account numbers specified in the automated billing update information.

10. Method according to claim 9, wherein the further authorisation has been given to the merchant by the owner when ordering goods and/or services top be paid by reoccurring financial transactions.

11. Method according to claim 10, wherein presence of the further authorisation is associated to user profile data associated to the owner.

12. Method according to claim 11, wherein the user profile is stored in a database associated to the card network.

13. Method according to any of claims 1 to 7, wherein financial transactions marked as valid are processed according to the automated billing update cycle requirements.

14. A computing device configures to execute the method of any of claims 1 to 11.

15. A computer readable medium storing program instructions, which, when executed by a processor of a computer cause the computer to perform each of the method steps of claims 1 to 11.
